# EUROPÄISCHE PATENTANMELDUNG

(11) **EP 1 757 833 A2**
(43) Veröffentlichungstag der Anmeldung: **28.02.2007**
(21) Anmeldenummer: 06016606.3
(22) Anmeldetag: 09.08.2006
(51) Int. Cl.: F16D 41/12

(54) **Einwegekupplung und ein Stator mit einer Einwegekupplung**

(30) Priorität: 24.08.2005 US 710828 P
(71) Anmelder: LuK Lamellen und Kupplungsbau Beteiligungs KG, 77815 Bühl (DE)
(72) Erfinder: Brees, William, 44691 Wooster, Ohio (US); Hemphill, Jeffrey, 44321 Copley, Ohio (US); Hoffmann, Joachim, 44691 Wooster (US)

(57) **Zusammenfassung**

Die vorliegende Erfindung umfasst im weitesten Sinne einen Stator (1) für einen Drehmomentwandler mit einer ersten (14) und einer zweiten Platte (24). Die erste Platte ist mit einem Rahmen (2) des Stators verbunden und beinhaltet mindestens eine erste Öffnung. Die zweite Platte ist mit einer Nabe (10) des Stators verbunden und beinhaltet mindestens einen ersten Vorsprung, der in die mindestens eine erste Öffnung (20) einrasten kann. Die erste Platte kann um eine Achse der Nabe gedreht werden, und der mindestens eine Vorsprung (26) und die mindestens eine Öffnung können ineinander einrasten, wenn sich die erste Platte bezüglich der Achse in einer ersten Richtung dreht. Der mindestens eine erste Vorsprung und die mindestens eine erste Öffnung können gleitend ineinander eingreifen, wenn sich die erste Platte in einer der ersten Richtung entgegengesetzten zweiten Richtung dreht.

## Beschreibung

Die Erfindung betrifft eine axial einkuppelnde und auskuppelnde Einwegekupplung. Insbesondere betrifft die Erfindung einen Stator mit einer axial einkuppelnden und auskuppelnden Einwegekupplung für einen Drehmomentwandler.

Drehmomentwandler werden oft in Motorfahrzeugen zur Übertragung der Drehmoments vom Motor zum Schaltgetriebe verwendet. Ein Drehmomentwandler umfasst üblicherweise drei Hauptkomponenten, also einen Impeller, ein Turbinenrad und einen Stator, der zwischen dem Impeller und dem Turbinenrad aufgehängt ist. Alle Teile sind in einem Wandlergehäuse untergebracht, das mit Hydraulikflüssigkeit gefüllt ist.

Der Stator umfasst einen Statorrahmen zur Halterung von Leitstreben und eine Einwegekupplung, die üblicherweise am Innenrand des Statorrahmens angebracht ist. Im Allgemeinen weist die Einwegekupplung einen äußeren Freilaufring, der in Drehrichtung fest mit dem Statorrahmen verbunden ist, einen inneren Freilaufring, der in Drehrichtung fest mit einer am Schaltgetriebe angebrachten Statorwelle verbunden ist, und einen dazwischen angeordneten Einwegekupplungsmechanismus auf. Die Einwegekupplung lässt eine Drehung des Stators gegenüber der Statorwelle nur in einer relativen Drehrichtung zu und sperrt diesen in der anderen Drehrichtung.

Einwegekupplungsmechanismen, zum Beispiel der Klinkenfreilauf EP 0 525 126 B1, der Walzenfreilauf (DE 32 41 053 A1 und 195 32 32 923 C2) oder der Spreizfreilauf (EP 0 811 788 B1) sind bekannt. Ungünstig ist jedoch, dass diese Kupplungsmechanismen aus einer Vielzahl einzelner Elemente bestehen, die einen hohen Fertigungs- und Montageaufwand erfordern. So müssen zum Beispiel in einem Walzenfreilauf zahlreiche Klemmrollen in Aussparungen des Außenrings zwischen die Freilaufringe eingefügt werden. Die jeweilige Feder drückt die Klemmrolle gegen eine zugehörige Kupplungswalze. Je nach Drehrichtung kann sich der Außenring gegenüber dem Innenring drehen oder keilartig gesperrt werden.

In der DE 100 17 744 A1 wird ein Freilauf für einen Stator in einem hydrodynamischen Drehmomentwandler mit einem Sperrelementhalter beschrieben, der sich über den Umfang hinweg erstreckt und aus einem Element in Form einer Ringscheibe gebildet ist. Aus der Ringscheibe ragen erste und zweite Sperrelemente in entgegengesetzten axialen Richtungen und in entgegengesetzten Umfangsrichtungen hervor. Desgleichen weisen das massive innere Freilaufelement und das massive äußere Freilaufelement einander gegenüberliegende Segmente auf, in denen mittels Prägeverfahren in axialer Richtung offene Aussparungen gebildet sind.

Die axial herausragenden Sperrelemente des Sperrelementträgers rasten in axialer Richtung in diese Aussparungen ein. Außerdem sind am Außenrand des Sperrelementträgers eine Vielzahl von Vertiefungen gebildet, in die das innere Freilaufelement mit passenden, in radialer Richtung nach innen fassenden, Kupplungsvorsprüngen einrastet, um eine in Drehrichtung feste Kopplung zwischen dem Sperrelementträger und dem inneren Freilaufelement zu erreichen. Die Sperrflächen sind einander gegenüber so angeordnet, dass sie einander in entgegengesetzten Drehrichtungen gegenüberliegen und mit den jeweils zugeordneten Sperrelementen zusammenpassen. Um die in erster Linie im Sperrmodus des Freilaufs am Stator auftretenden axialen Scherkräfte aufzunehmen, kann ein zusätzliches Halterungselement zwischen den beiden Elementen vorgesehen werden. Allerdings müssen die Freilaufelemente am Rand des Stators angebracht werden, was möglicherweise nicht immer wünschenswert ist.

Die vorliegende Erfindung umfasst im weitesten Sinne eine Einwegekupplung für eine Kraftfahrzeugbaugruppe, wobei die Einwegekupplung Folgendes beinhaltet: eine radial um eine Achse der Baugruppe herum angeordnete und in Drehrichtung mit einem rotierenden Element der Baugruppe verbundene erste Platte und eine radial um die Achse herum angeordnete zweite Platte. Die erste Platte enthält eine erste Öffnung und/oder einen ersten Vorsprung. Die zweite Platte enthält das Gegenstück der ersten Öffnung und des anderen ersten Vorsprungs, wobei der erste Vorsprung einrasten und dadurch sperren kann. Die erste Platte kann in einer ersten Richtung um die Achse gedreht werden, und der erste Vorsprung und die erste Öffnung können ineinander einrasten, wenn sich die erste Platte in der ersten Richtung schneller dreht als die zweite Platte. Gemäß einigen Aspekten ist die zweite Platte in der ersten Richtung drehbar oder nichtdrehbar um die Achse herum angeordnet. Der erste Vorsprung und die erste Öffnung können gleitend ineinander greifen, wenn sich die erste Platte in einer der ersten Richtung entgegengesetzten zweiten Richtung gegenüber der zweiten Platte dreht. Gemäß einigen Aspekten ist die zweite Platte um die Achse herum nichtdrehbar angeordnet.

Gemäß einigen Aspekten beinhaltet die Kupplung eine in axialer Richtung zwischen der ersten und der zweiten Platte angeordnete Zwischenplatte. Wenn sich die erste Platte gegenüber der zweiten Platte in der zweiten Richtung dreht, können die Zwischenplatte und der erste Vorsprung ineinander einrasten, und die Zwischenplatte verhindert das Einrasten des ersten Vorsprungs in die erste Öffnung. Gemäß einigen Aspekten enthält die Zwischenplatte eine zweite Öffnung, wobei die erste Öffnung und die zweite Öffnung aufeinander ausgerichtet werden können. Gemäß einigen Aspekten beinhaltet der mindestens eine Vorsprung eine Zunge, die in die erste oder die zweite Platte einrasten kann, wenn sich die Zwischenplatte in der zweiten Richtung dreht. Gemäß einigen Aspekten besteht zumindest die erste oder die zweite Platte oder die Zwischenplatte aus einem Stanzteil.

Gemäß einigen Aspekten beinhaltet die Kupplung ein an der zweiten Platte anliegendes Andruckelement, kann die zweite Platte in axialer Richtung verschoben werden und drückt das Andruckelement die zweite Platte entlang der Achse gegen die erste Platte. Gemäß einigen Aspekten ist das Andruckelement eine Feder, oder die zweite Platte ist von Natur aus elastisch und liegt an der ersten Platte an.

Gemäß einigen Aspekten beinhaltet die Kupplung eine in radialer Richtung um die Achse herum angeordnete und in Drehrichtung mit dem Drehelement verbundene dritte Platte und eine in radialer Richtung um die Achse angeordnete vierte Platte. Die dritte Platte enthält eine zweite Öffnung oder einen zweiten Vorsprung, und die vierte Platte enthält das Gegenstück zu der zweiten Öffnung oder dem zweiten Vorsprung, sodass die zweite Öffnung und der zweite Vorsprung einrasten und sperren können.

Gemäß einigen Aspekten beinhaltet die Kupplung mindestens eine zwischen der ersten und der zweiten Platte angeordnete Bahn und mindestens ein in der mindestens einen Bahn angeordnetes Element, das an der ersten und an der zweiten Platte anliegt. Die zweite Platte kann in axialer Richtung gegenüber der ersten Platte verschoben werden, und die erste Öffnung und der erste Vorsprung können ineinander einrasten, wenn das Element in der Bahn bewegt wird, wobei das Element als Reaktion auf eine Drehung der ersten Platte gegenüber der zweiten Platte bewegt werden kann. Gemäß einigen Aspekten ist das Element eine Kugel. Gemäß einigen Aspekten kann die Kraftfahrzeugbaugruppe ein Stator für einen Drehmomentwandler, ein Drehmomentwandler, ein Betätigungsmechanismus, ein Hilfsantrieb oder ein Schaltgetriebe sein.

Die vorliegende Erfindung umfasst im weitesten Sinne eine Einwegekupplung für einen Stator eines Drehmomentwandlers, wobei die Einwegekupplung eine in radialer Richtung um eine Achse des Stators herum angeordnete und in Drehrichtung mit einem Rahmen des Stators verbundene erste Platte sowie eine in radialer Richtung um die Achse herum angeordnete und in Drehrichtung mit einer Nabe des Stators verbundene zweite Platte beinhaltet. Die erste Platte enthält eine erste Öffnung und/oder einen ersten Vorsprung. Die zweite Platte enthält das Gegenstück zu der ersten Öffnung oder dem ersten Vorsprung in der Weise, dass der erste Vorsprung und die erste Öffnung ineinander einrasten können, wenn sich die erste Platte in einer ersten Richtung dreht, und der erste Vorsprung und die erste Öffnung gleitend ineinander eingreifen können, wenn sich die erste Platte in einer der ersten Richtung entgegengesetzten zweiten Richtung dreht. Gemäß einigen Aspekten enthält der Stator eine in axialer Richtung zwischen der ersten und der zweiten Platte angeordnete Zwischenplatte. Wenn sich die erste Platte in der zweiten Richtung dreht, können die Zwischenplatte und der erste Vorsprung ineinander einrasten, sodass die Zwischenplatte das Einrasten des ersten Vorsprungs in die erste Öffnung verhindert. Gemäß einigen Aspekten besteht mindestens eine der beiden Platten, die erste, die zweite Platte bzw. die Zwischenplatte aus einem Stanzteil. Gemäß einigen Aspekten beinhaltet die Kupplung ein an der zweiten Platte anliegendes Andruckelement, wobei die zweite Platte in axialer Richtung verschoben werden kann und das Andruckelement die zweite Platte entlang der Achse gegen die erste Platte drückt. Gemäß einigen Aspekten beinhaltet der Stator mindestens eine zwischen der ersten und der zweiten Platte angeordnete Bahn und mindestens ein in der mindestens einen Bahn angeordnetes Element, das an der ersten und an der zweiten Platte anliegt. Wenn sich die erste Platte gegenüber der zweiten Platte dreht, können das Element als Reaktion darauf verschoben, die zweite Platte gegenüber der ersten Platte in axialer Richtung verschoben werden und die erste Öffnung und der erste Vorsprung ineinander einrasten.

Die vorliegende Erfindung umfasst ferner im weitesten Sinne eine Einwegekupplung für einen Stator für einen Drehmomentwandler, wobei die Einwegekupplung Folgendes beinhaltet: eine in radialer Richtung um eine Achse des Stators angebrachte und in Drehrichtung mit einem Rahmen des Stators verbundene erste gestanzte Platte, die eine erste Öffnung enthält; eine in Drehrichtung mit einer Nabe des Stators verbundene zweite gestanzte Platte, die einen ersten Vorsprung enthält; ein an der zweiten Platte anliegendes Andruckelement; und eine in axialer Richtung zwischen der ersten und der zweiten Platte angeordnete Zwischenplatte. Der erste Vorsprung und die erste Öffnung können ineinander einrasten, wenn die erste Platte in einer ersten Richtung gedreht wird, und der erste Vorsprung und die erste Öffnung können gleitend ineinander eingreifen, wenn sich die erste Platte in einer der ersten Richtung entgegengesetzten zweiten Richtung dreht. Wenn sich die erste Platte in der zweiten Richtung dreht, können die Zwischenplatte und der erste Vorsprung ineinander einrasten, sodass die Zwischenplatte das Einrasten des ersten Vorsprungs in die erste Öffnung verhindert. Die zweite Platte kann in axialer Richtung verschoben werden, sodass das Andruckelement die zweite Platte entlang der Achse gegen die erste Platte drückt.

Die Erfindung umfasst auch ein Verfahren für den Freilauf in einem Stator eines Drehmomentwandlers.

Eine Aufgabe der vorliegenden Erfindung besteht darin, die Struktur eines Freilaufs im Stator eines Drehmomentwandlers zu vereinfachen.

Eine andere Aufgabe der vorliegenden Erfindung besteht darin, die Fertigungskosten für einen Freilauf im Stator eines Drehmomentwandlers zu verringern.

Eine weitere Aufgabe der vorliegenden Erfindung besteht darin, die Masse eines Freilaufs in einem Stator zu verringern.

Noch eine weitere Aufgabe der vorliegenden Erfindung besteht darin, den Verschleiß der Bauteile während der Betätigung des Freilaufs zu verringern.

Diese sowie weitere Aufgaben und Vorteile der vorliegenden Erfindung werden klar aus der folgenden Beschreibung bevorzugter Ausführungsarten der Erfindung und aus den beiliegenden Zeichnungen und Ansprüchen.

Im Folgenden wird die Erfindung ausführlich unter Bezug auf eine beispielhafte Ausführungsart beschrieben. Bei den beiliegenden Zeichnungen ist:
Fig. 1 eine Draufsicht auf einen Stator gemäß der vorliegenden Erfindung mit Einwegekupplungsmechanismus;
Fig. 1A eine Querschnittsansicht des Stators in Fig. 1 entlang der Schnittlinie 1A-1A in Fig. 1;
Fig. 1B eine Querschnittsansicht einer typischen Nase für einen Stator gemäß der vorliegenden Erfindung;
Fig. 2 eine Draufsicht auf einen Stator gemäß der vorliegenden Erfindung mit zwei Kupplungsmechanismen;
Fig. 2A eine Querschnittsansicht des Stators in Fig. 2 entlang der Schnittlinie 2A-2A in Fig. 2:
Fig. 3 eine Teilquerschnittsansicht eines aus gestanzten Metallteilen bestehenden Stators gemäß der vorliegenden Erfindung;
Fig. 3A eine Teilquerschnittsansicht des Stators in Fig. 3 entlang der Schnittlinie 3A-3A in Fig. 3;
Fig. 4 eine Teilquerschnittsansicht eines Stators gemäß der vorliegenden Erfindung mit einem verschiebbaren Element zum Trennen der Platten;
Fig. 4A eine Teildraufsicht des Stators in Fig. 4A entlang der Schnittlinie 4A-4A in Fig. 4;
Fig. 5 eine Draufsicht auf einen Stator gemäß der vorliegenden Erfindung mit einer Zwischenplatte;
Fig. 5A eine Querschnittsansicht des Stators in Fig. 5 im Freilaufmodus entlang der Schnittlinie 5A-5A in Fig. 5;
Fig. 5B ist eine Querschnittsansicht des Stators im Sperrmodus entlang der Schnittlinie 5A-5A in Fig. 5;
Fig. 6 eine Draufsicht auf einen Stator gemäß der vorliegenden Erfindung mit einer Zwischenplatte;
Fig. 6A eine Querschnittsansicht des Stators in Fig. 6 im Freilaufmodus entlang der Schnittlinie 6A-6A; und
Fig. 6B eine Querschnittsansicht des Stators in Fig. 6 im Sperrmodus entlang der Schnittlinie 6A-6A in Fig. 6.

Einleitend ist zu sagen, dass gleiche Bezugsnummern in verschiedenen Zeichnungsansichten identische oder funktionell ähnliche Strukturelemente der Erfindung kennzeichnen. Obwohl die vorliegende Erfindung unter Bezug auf die bevorzugten Aspekte beschrieben wird, ist klar, dass die Erfindung vorliegende Erfindung nicht auf die dargelegten Aspekte beschränkt ist.

Außerdem ist klar, dass die Erfindung nicht auf die beschriebenen bestimmten Verfahren, Werkstoffe und Modifikationen beschränkt ist, sondern dass diese selbstverständlich variieren können. Ferner ist klar, dass die hier verwendeten Begriffe lediglich zur Beschreibung bestimmter Aspekte dienen und nicht den Geltungsbereich der vorliegenden Erfindung einschränken sollen, der ausschließlich durch die beiliegenden Ansprüche festgelegt wird.

Alle hier verwendeten technischen und wissenschaftlichen Begriffe haben, wenn nicht anders definiert, die für einen Fachmann allgemein verständliche Bedeutung, an den die vorliegende Erfindung gerichtet ist. Obwohl im Folgenden die bevorzugten Verfahren, Einheiten und Werkstoffe beschrieben werden, können alle möglichen Verfahren, Vorrichtungen und Materialien zur Ausübung oder Prüfung der Erfindung verwendet werden, die den hier beschriebenen ähnlich oder gleichwertig sind.

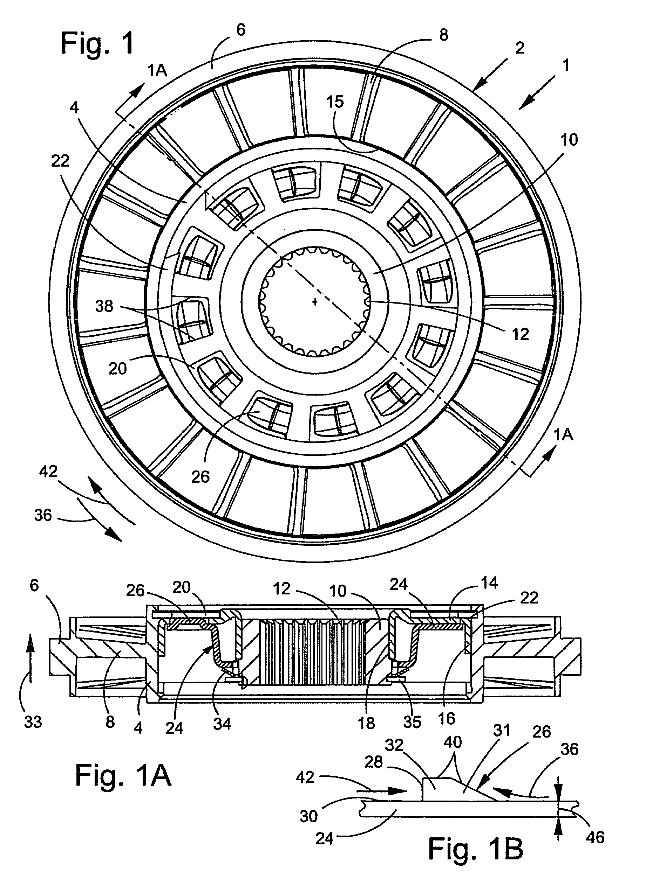

Fig. 1 ist eine Draufsicht auf einen Stator mit einem Einwegekupplungsmechanismus gemäß der vorliegenden Erfindung.

Fig. 1A ist eine Querschnittsansicht des Stators in Fig. 1 entlang der Schnittlinie 1A-1A. Die folgende Beschreibung bezieht sich auf die Figuren 1 und 1A. Der Stator 1 beinhaltet einen Statorrahmen 2 mit einem in einem Stück gebildeten inneren Statorring 4, einem in einem Stück gebildeten äußeren Statorring 6 und zwischen dem inneren Statorring 4 und dem äußeren Statorring 6 angeordneten Leitstreben 8. Der Rahmen, der Ring und die Streben können aus einem beliebigen in der Technik bekannten Werkstoff hergestellt werden, zum Beispiel aus Druckgussaluminium. Die Statornabe 10 enthält ein gezähntes Innenprofil 12, das auf eine (nicht gezeigte) Statorwelle eines (nicht gezeigten) Schaltgetriebes passt. Gemäß einigen Aspekten ist die Statornabe 10 massiv und kann aus einem beliebigen in der Technik bekannten Werkstoff hergestellt werden, zum Beispiel aus Edelstahl oder bruchfestem Kunststoff. Eine zylindrische Rastscheibe 14 ist an der Innenfläche 15 des inneren Statorrings 4 angeordnet und das Außengehäuse 16 der Scheibe 14 durch ein beliebiges in der Technik bekanntes Mittel am Ring befestigt. Die Scheibe 14 ist in radialer Richtung auf einer (nicht gezeigten) Längsachse des Stators 1 angeordnet. Mit anderen Worten, die Scheibe 14 steht im Wesentlichen rechtwinklig zur Achse. Die Scheibe 14 ist in Drehrichtung mit dem Rahmen 2 verbunden. Das Innengehäuse 18 der zylindrischen Rastscheibe 14 dient der Zentrierung und der Führung der Statornabe 10. Der Statorrahmen 2 bildet eine massive ringförmige Basis, um die Statornabe 10 innerhalb des inneren Statorrings 4 zu halten. Die Rastscheibe 14 beinhaltet mindestens ein Fenster 20. Gemäß einigen Aspekten sind die Fenster 20 in gleichmäßigen Abständen angeordnet. Ein Sprengring 22 im inneren Statorring 4 fixiert die Rastscheibe 14 im Stator. Zwischen dem inneren Statorring 4 und der Statornabe 10 ist eine Sperrscheibe 24 angeordnet. Die Sperrscheibe 24 ist in Drehrichtung fixiert, kann aber in axialer Richtung gegenüber der Nabe 10 verschoben werden. Gemäß einigen Aspekten ist die Scheibe 24 topfförmig. Die Scheibe 24 ist in radialer Richtung um die Längsachse des Stators 1 herum angeordnet. Mit anderen Worten, die Scheibe 24 steht im Wesentlichen rechtwinklig zur Achse.

Fig. 1 B ist eine Querschnittsansicht einer typischen Nase für einen Stator gemäß der vorliegenden Erfindung. Im Folgenden bezieht sich die Beschreibung auf die Figuren 1, 1A und 1 B. Die Sperrscheibe 24 beinhaltet Nasen oder Vorsprünge 26, die so ausgerichtet sind, dass sie den Fenstern 20 gegenüber liegen. Allgemein ist die Anzahl der Nasen 26 gleich der Anzahl der Fenster 20. Die Nasen 26 sind so gebaut, dass sie eine üblicherweise zur Fläche 30 rechtwinklige Fläche 28 bilden. Fig. 1 B veranschaulicht die allgemeinen Merkmale der Nasen, zum Beispiel die schräge Fläche 31 und die ebene Fläche 32, zeigt aber keine Einzelheiten wie beispielsweise Fasen. Es ist klar, dass auch andere Formen der Nase 26 dem Geist und dem Geltungsbereich der Ansprüche entsprechen.

Die Sperrscheibe 24 ist so angeordnet, dass die Scheibe in die Richtung 33 gedrückt wird. Gemäß einigen Aspekten ist die Sperrscheibe von Natur aus elastisch. Gemäß einigen Aspekten übt die Tellerfeder 34 eine Kraft auf die Scheibe 24 aus. Die Tellerfeder 34 ist auf der Statornabe 10 angeordnet und durch einen Sprengring 35 gesichert. Die Nasen 26 werden in die Richtung 33 gedrückt und rasten dadurch in die Fenster 20 ein. Gemäß einigen Aspekten bestehen der Statorrahmen 2 und die Statornabe 10 aus Gussteilen; die Rastscheibe 14 und die Sperrscheibe 24 sind einfache gebogene Stanzteile; und die Tellerfeder 34 und die Sprengringe 22 und 35 sind Normteile, sodass die Fertigungskosten für den Stator 1 gesenkt werden.

Im Folgenden wird die Funktion der vorliegenden Erfindung kurz beschrieben. Im Freilaufmodus drehen sich der Rahmen 2 und die Scheibe 14 in der Richtung 36. Aufgrund der Verbindung der Nabe mit der Welle drehen sich die Nabe 10 und die Scheibe 24 nicht. Die Nasen 26 greifen im Freilaufmodus gleitend in die Fenster 20 ein. Das heißt, die Kanten 38 gleiten über die Fläche 30, dann über die Fläche 40 der Nasen 26 und springen dann beim Erreichen der Fläche 28 wieder auf die Fläche 30 zurück (dazu ist anzumerken, dass die Scheibe 14 in axialer Richtung fixiert ist und die Scheibe 24 in axialer Richtung verschoben werden kann). Somit kann sich der Rahmen 2 gegenüber der Nabe 10 im Freilauf drehen. Das heißt, der Rahmen dreht sich unabhängig von der Nabe. Dadurch kann sich der Stator 1 frei drehen, während über die Streben 8 ein Drehmoment in der Richtung 36 auf den Statorrahmen 2 übertragen wird.

Beim Sperrmodus drehen sich der Rahmen 1 und die Scheibe 14 in der Richtung 42. Wie oben erwähnt, drehen sich die Nabe 10 und die Scheibe 24 nicht. Während der Drehung der Scheibe 14 gleiten die Kanten 38 über die Nasen 26 und rasten ein. Das heißt, die Kanten gleiten über die Fläche 30 und rasten an der Kante 28 ein. Da die Scheibe 24 in die Richtung 33 gedrückt wird, wird die Fläche 30 gegen die Scheibe 14 gedrückt, und die Scheibe kann sich nicht an der Kante 28 vorbei bewegen. Somit können sich der Statorrahmen 2 und die Statornabe 10 in dieser Drehrichtung untereinander nicht mehr im Freilauf drehen. Das heißt, der Rahmen 2 ist durch die Nabe 10 in Drehrichtung gesperrt. Der Statorrahmen 2 wird dadurch gesperrt, dass die Statornabe 10 auf der Statorwelle eines Fahrzeugschaltgetriebes fixiert ist. Es ist klar, dass die Richtungen 36 und 42 und die Anordnung der Nasen 26 umgekehrt werden können und diese Variante auf jeden der Aspekte der vorliegenden Erfindung angewendet werden kann.

Gemäß einigen (nicht gezeigten) Aspekten ist die Rastscheibe 14 bezüglich der Statornabe 10 und die Sperrscheibe 24 bezüglich dem inneren Statorring 4 in Drehrichtung fixiert. Es ist klar, dass diese allgemeine Anordnung auf andere Aspekte der vorliegenden Erfindung angewendet werden kann.

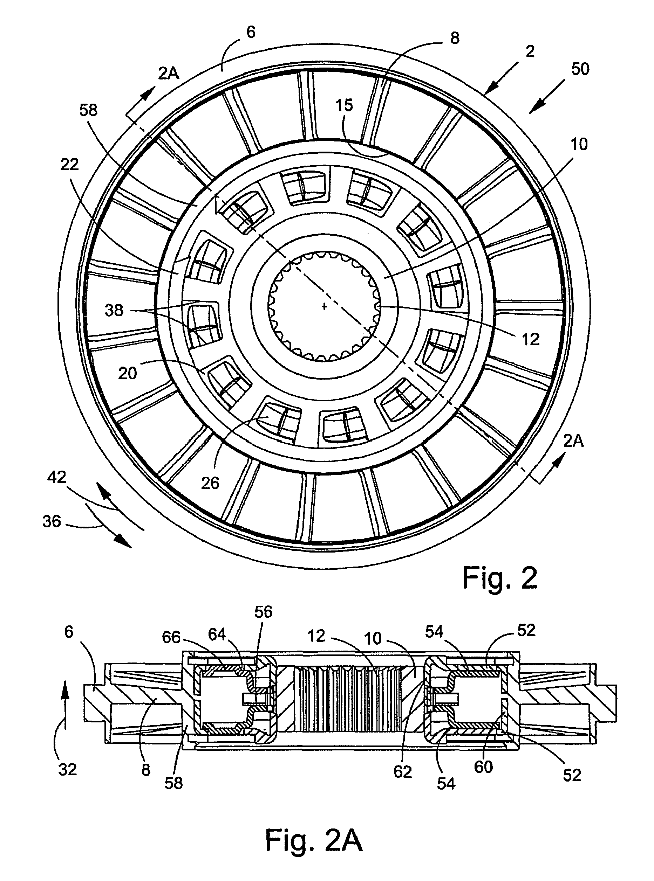

Fig. 2 ist eine Draufsicht auf einen Stator 50 mit zwei Kupplungsmechanismen gemäß der vorliegenden Erfindung.

Fig. 2A ist eine Querschnittsansicht des Stators 50 entlang der Schnittlinie 2A-2A in Fig. 2. Die folgende Beschreibung bezieht sich auf die Figuren 2 und 2A. Der Stator 50 ist im Wesentlichen derselbe Stator wie in den Figuren 1 und 1A, wobei beim Stator 50 lediglich die Rastscheiben 52 und die Sperrscheiben 54 spiegelbildlich zueinander angeordnet sind. Gemäß einigen Aspekten sorgt die mittig befestigte Wellenfeder 56 für das Auseinanderdrücken der Sperrscheiben 54. Es ist jedoch klar, dass jedes beliebige in der Technik bekannte Mittel zum Auseinanderdrücken der Scheiben verwendet werden kann. Das Außengehäuse 60, das Innengehäuse 62, die Fenster 64 und die Nasen 66 entsprechen im Wesentlichen dem Außengehäuse 16, dem Innengehäuse 18, den Fenstern 20 und den Nasen in Fig. 1.

Gemäß einigen (nicht gezeigten) Aspekten sind die Rastscheiben 52 nicht voneinander getrennt, sondern bilden ein einziges Teil.

Gemäß einigen (nicht gezeigten) Aspekten sind die Rastscheiben 52 in Drehrichtung in Bezug auf die Statornabe 10 und die Sperrscheiben 54 in Drehrichtung in Bezug auf den inneren Statorring 58 fixiert.

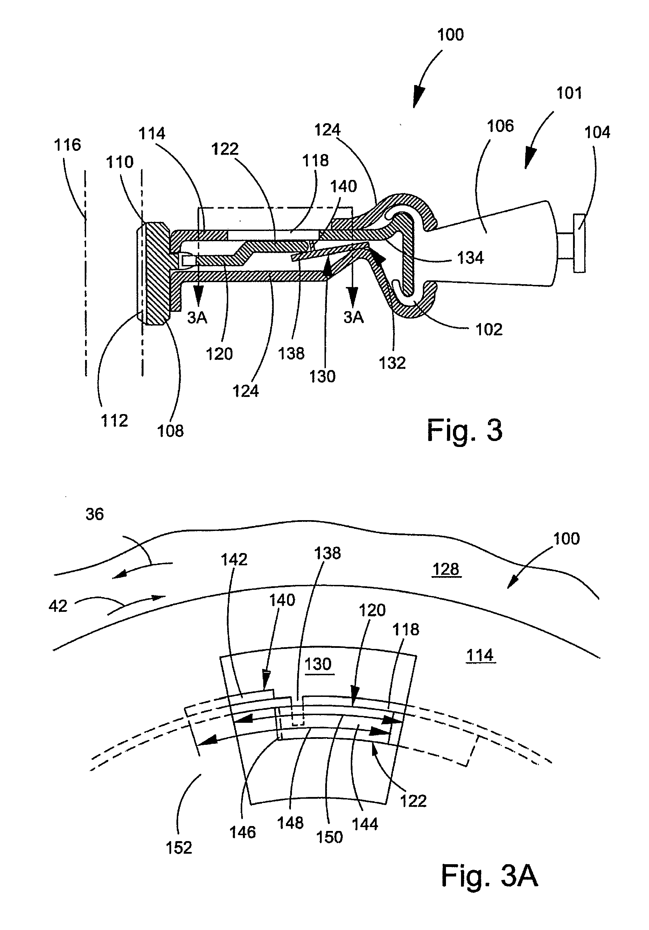

Fig. 3 ist eine Teilquerschnittsansicht des aus gestanzten Metallteilen hergestellten Stators 100 gemäß der vorliegenden Erfindung.

Fig. 3A ist eine Teilquerschnittsansicht des Stators 100 entlang der Schnittlinie 3A-3A in Fig. 3. Die folgende Beschreibung bezieht sich auf die Figuren 3 und 3A. Der in den Figuren 3 und 3A gezeigte Stator lässt sich aufgrund der stärkeren Verwendung von gepressten Stanzteilen leichter und zu geringeren Kosten herstellen. Der Statorrahmen 101 enthält einen inneren Statorring 102, einen äußeren Statorring 104 und Leitstreben 106. Die Streben sind um die Statornabe 108 herum zwischen dem inneren Statorring 102 und dem äußeren Statorring 104 angeordnet. Der Innenring 110 trägt ein gezähntes Innenprofil 112 für eine (nicht gezeigte) Statorwelle. Der Statorrahmen 101 und die Statornabe 108 sind Gussteile, zum Beispiel aus Druckgussaluminium, oder Spritzgussteile aus Kunststoff (ähnlich wie der Rahmen und die Nabe in den Figuren 1A und 2A). Gemäß einigen (nicht gezeigten) Aspekten bestehen der Statorrahmen und die Statornabe jedoch aus Blech. Der Statorrahmen und die Statornabe aus Blech weisen somit im Vergleich zur Nabe und zum Rahmen in den Figuren 1 und 2 (Bezugsnummern 10 und 2) den Vorteil auf, dass sie ihre entsprechenden Strukturen vereinfacht sind.

Der Innenring 102 des Statorrahmens 101 ist in bezüglich der Drehung der Nabe um die Achse 116 fest mit der Rastscheibe 114 verbunden. In der Scheibe 114 befinden sich Fenster 118. Die Rastscheibe 114 ist drehbar mit der Statornabe 108 verbunden. Die Sperrscheibe 120 enthält am Rand der Scheibe 120 gepresste Nasen 122 und ist bezüglich der Drehung der Nabe um die Achse 116 fest mit der Statornabe 108 verbunden. Der ringförmige Statorrahmenträger 124 umgibt den inneren Statorring 102 des Statorrahmens 101. Der Träger 124 ist bezüglich der Drehung des Rings 102 um die Achse 116 fest mit dem Ring verbunden und führt die Statornabe 108. Somit erfolgt die Drehung des inneren Statorrings 102, des äußeren Statorrings 104, der Führungsstreben 106, der Scheibe 114 und des Trägers 124 gemeinsam.

Die Tellerfeder 130 drückt gegen die Sperrscheibe 120, sodass die Nasen 122 in die Fenster 118 einrasten können. Es ist jedoch klar, das zum Andrücken der Scheibe 120 ein beliebiges in der Technik bekanntes Mittel verwendet werden kann. Die Tellerfeder 130 ist an ihrem Außenrand 132 zusammengedrückt und liegt am Scheibenträger 124 an. Somit übt die Feder 130 auf die Sperrscheibe 120 eine Kraft in Richtung zur Rastscheibe 114 aus. Die Feder 130 liegt zum Beispiel an den Zungen 138 an der Scheibe 120 an. Die Feder 130 liegt am Träger 124 auf einer größeren Fläche an als an der Scheibe 120. Deshalb dreht sich die Feder 130 gemeinsam mit dem Träger und dreht sich im Freilaufmodus unabhängig von der Scheibe 120. Gemäß einigen (nicht gezeigten) Aspekten kann jedoch auch eine von Natur aus elastische Sperrscheibe 120 eingesetzt und die Tellerfeder 130 weggelassen werden. Dann liegt die Sperrscheibe 120 direkt am Statorringträger 124 an und wird durch diesen an ihrem Außenrand zusammengedrückt. Die Zungen 138 erstrecken sich in radialer Richtung nach innen zur Nabe 108 und rasten an den Nasen 122 in die Scheibe 120 ein. Die Feder 130 enthält ebenfalls Zungen 140 mit oberen Flächen 142.

Bei dem in den Figuren 3 und 3A gezeigten Freilaufmodus (Richtung 36) werden die Zungen 138 so weit gedreht, bis sie in die Nähe der Wand 146 der Nasen 122 kommen oder in diese einrasten, sodass eine weitere Bewegung der Feder in die Richtung 36 verhindert wird. In dieser Stellung liegen die oberen Flächen 142 in radialer Richtung im Wesentlichen koplanar zu den oberen Flächen 144 der Nasen 122, und die Länge 148 der oberen Flächen 142 und 144 insgesamt ist größer als die Länge 150 des Fensters 118. Die tangential zwischen den Fenstern liegenden Segmente 152 der Scheibe 114 gleiten auf den Flächen 142 und 144, sodass die Nasen 122 nicht in die Fenster 118 einrasten können. Infolgedessen drehen sich die Scheibe 114 und die Scheibe 120 unabhängig voneinander.

Im Sperrmodus (Richtung 42) bewegen sich die Zungen 138 von der Wand 146 weg und werden in radialer Richtung auf die Nasen 122 ausgerichtet. Durch die Ausrichtung der Zungen auf die Nasen wird die Strecke 148 kleiner als die Strecke 150. Dadurch schieben sich die Nasen 122 in die Fenster 118, wie dies oben für die Nasen und Fenster in Fig. 1 (Bezugsnummern 26 bzw. 20) beschrieben wurde, und die Scheibe 114 und die Scheibe 120 rasten ein, wie dies oben für die Rastscheibe und die Sperrscheibe in Fig. 1 (Bezugsnummern 14 bzw. 24) beschrieben wurde.

Gemäß einigen Aspekten sind die Nabe 108 und der Statorrahmen 101 massiv gebaut und bestehen zum Beispiel aus Druckgussaluminium, während die übrigen Teile aus Blech- oder Kunststoffprofilen hergestellt werden. Gemäß anderen Aspekten können jedoch auch die Statornabe 108 und/oder der Statorrahmen 101 aus Blech- oder Kunststoffprofilen hergestellt werden, sodass Druckguss- oder Spritzgussteile im Stator 100 nicht oder nur eingeschränkt erforderlich sind.

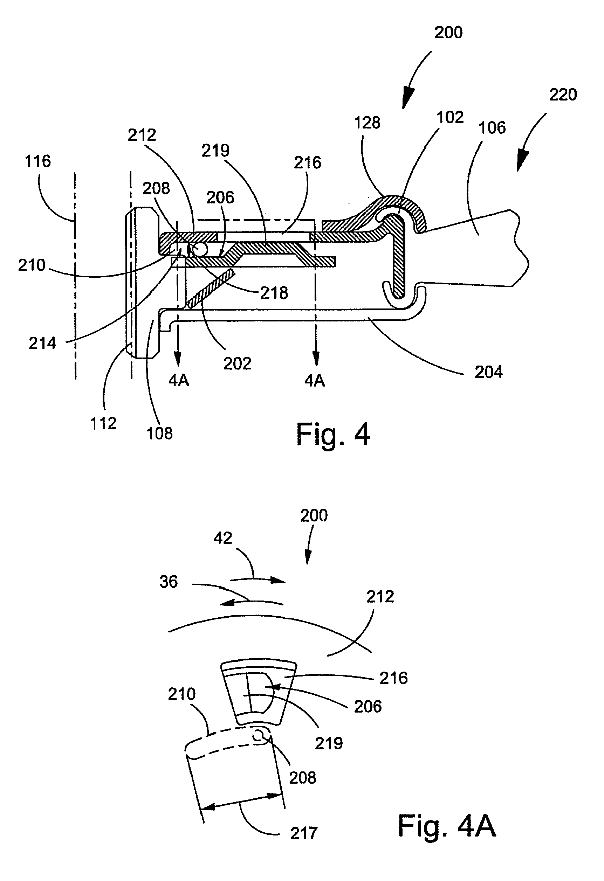

Fig. 4 ist eine Teilquerschnittsansicht des Stators 200 gemäß der vorliegenden Erfindung mit einem beweglichen Element zum Trennen der Platten.

Fig. 4A ist eine Teildraufsicht auf den Stator 200 entlang der Schnittlinie 4A-4A in Fig. 4. Die folgende Beschreibung bezieht sich auf die Figuren 4 und 4A. Anders als bei der Federanordnung in Fig. 3A befindet sich die Tellerfeder 202 hier auf oder in der Nähe der Statornabe 108 zwischen dem Statorringträger 204 und der Sperrscheibe 206. Bewegliche Elemente 208 sind in schrägen Aussparungen (die auch als Bahnen bezeichnet werden) untergebracht, die sich zwischen der Sperrscheibe 206 und der Rastscheibe 212 befinden. In den Aussparungen sind Elemente 208 eingeschlossen. Gemäß einigen Aspekten sind die Elemente 208 Kugeln. Gemäß einigen Aspekten sind die schrägen Aussparungen 210 in den Boden 214 der Rastscheibe 212 zwischen jedem Fenster 216 der Rastscheibe 212 und der Statornabe 108 eingelassen. Gemäß einigen Aspekten sind die Aussparungen 210 in der Scheibe 206 oder sowohl in der Scheibe 212 als auch in der Scheibe 206 gebildet. Gemäß einigen Aspekten ist der Statorringträger 204 anders aufgebaut als der Rahmenträger (Bezugsnummer 124) in Fig. 3A.

Die Aussparungen 210 sind über die Strecke 217 hinweg so geformt, dass die zwischen der Scheibe 206 und der Scheibe 212 über die Strecke hinweg gemessene Höhe 218 in der Richtung 36 zunimmt. Im Freilaufmodus (Drehrichtung 36) bewirkt die Rotationsenergie des Stators 200, dass die Kugeln 208 über die schrägen Aussparungen 210 in die Richtung 42 rollen. Da die Scheibe 212 und der Rahmenträger 204 in axialer Richtung fest mit dem Statorrahmen 220 verbunden sind, führt die Verringerung der Höhe 218 dazu, dass die Elemente 208 beim Durchlaufen der Aussparungen 210 die Scheibe 206 in axialer Richtung von der Scheibe 212 wegdrücken. Nach einer bestimmten Strecke ist die Scheibe 206 so weit weggedrückt, dass die Nasen 219 nicht mehr in die Fenster 216 einrasten. In diesem Fall dreht sich der Statorrahmen 220 frei auf der Statornabe 108. Durch diesen Freilaufmodus werden der Verschleiß des Stators verringert und weniger Geräusche erzeugt.

Im Sperrmodus (Drehrichtung 42) bewegen sich die Elemente 208 in die Richtung 36. Da die Scheibe 212 und der Rahmenträger 204 in axialer Richtung mit dem Statorrahmen 220 verbunden sind und die Höhe 218 zunimmt, während die Elemente die Aussparungen 210 durchlaufen, drückt die Feder 202 die Scheibe 206 in axialer Richtung gegen die Scheibe 212. Nach einer bestimmten Strecke ist die Scheibe 206 so weit weggedrückt, dass die Nasen 219 in die Fenster 216 einrasten und die Scheiben 206 und 212 miteinander gekoppelt sind.

Gemäß einigen (nicht gezeigten) Aspekten ist die Scheibe 206 in axialer Richtung fixiert und die Scheibe 212 in axialer Richtung verschiebbar, sodass die Feder 202 die Scheibe 212 gegen die Scheibe 206 drückt.

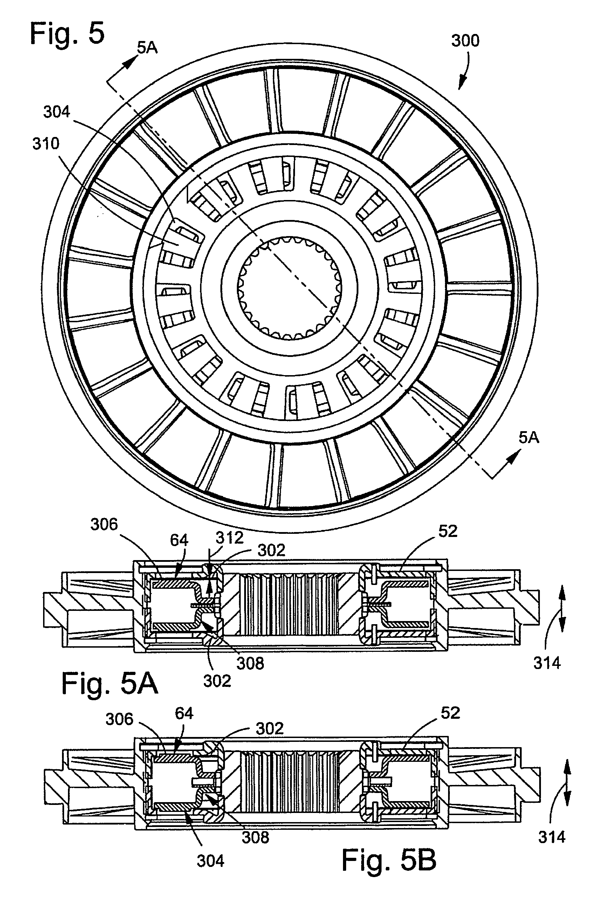

Fig. 5 ist eine Draufsicht auf den Stator 300 gemäß der vorliegenden Erfindung mit einer Zwischenplatte.

Fig. 5A ist eine Querschnittsansicht des Stators 300 im Freilaufmodus entlang der Schnittlinie 5A-5A in Fig. 5.

Fig. 5B ist eine Teilquerschnittsansicht des Stators 300 im Sperrmodus entlang der Schnittlinie 5A-5A in Fig. 5. Die folgende Beschreibung bezieht sich auf die Figuren 5, 5A und 5B. Der Stator 300 ist bis auf Zwischenplatten 302 mit Fenstern 304 im Wesentlichen mit dem Stator von Fig. 2 (Bezugsnummer 50) identisch. Fig. 5A zeigt den Stator 300 im Freilaufmodus. In diesem Modus hält die Platte 302 an einer Stelle an, an der die Segmente 310 der Platten 302 an den Nasen 306 zu stehen kommen, und verhindert, dass die Nasen in die Fenster 64 und 304 einrasten. Gemäß einigen Aspekten wird das Anhalten der Platte 302 durch die Reibung zwischen der Zwischenplatte 302 und den Nasen 306 der Sperrscheiben 308 bewirkt, jedoch können zur Steuerung der Stellung der Platte 302 andere (nicht gezeigte) in der Technik bekannte Mittel verwendet werden, zum Beispiel Stifte in Schlitzen und gebogene Zungen. Gemäß einigen Aspekten ist die Dicke 312 der Platten 302 kleiner als die Höhe der Nasen, wodurch der Hub der Sperrplatte in der axialen Richtung 314 verringert wird.

Durch diese Verringerung des Hubes wird die bei der Verschiebung der Scheiben 52 und der Platten 308 gegeneinander übertragene Energie (und damit die Geräusche) verringert.

Fig. 5B zeigt den Stator 300 im Sperrmodus. In diesem Modus sind die Fenster 64 und 304 aufeinander ausgerichtet, und die Scheiben 52 und die Nasen 306 verhalten sich so, wie bei der Scheibe und den Nasen in Fig. 1 (Bezugsnummern 14 bzw. 26) beschrieben wurde.

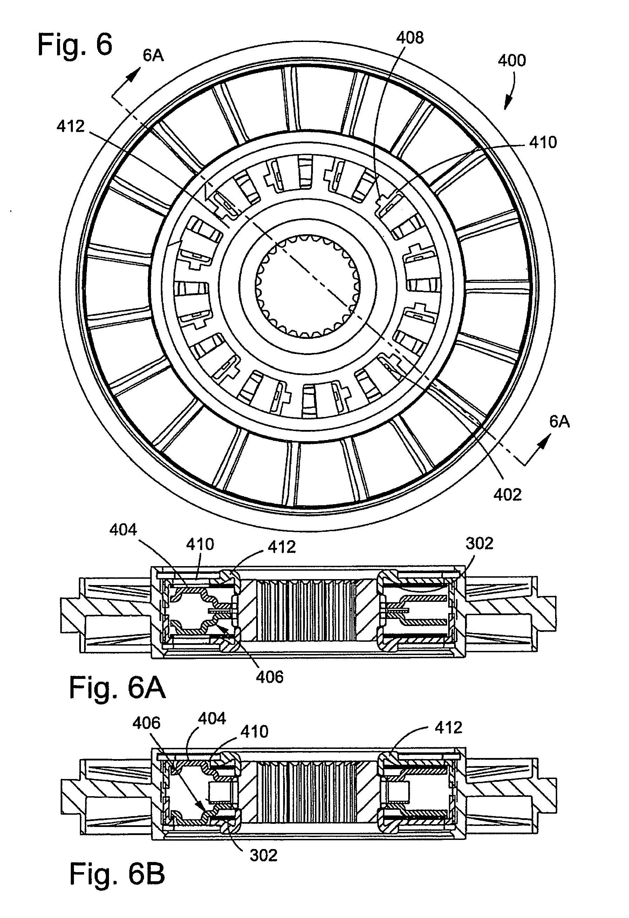

Fig. 6 ist eine Draufsicht auf den Stator 400 gemäß der vorliegenden Erfindung mit einer Zwischenplatte.

Fig. 6A ist eine Querschnittsansicht des Stators 400 im Freilaufmodus entlang der Schnittlinie 6A-6A in Fig. 6.

Fig. 6B ist eine Querschnittsansicht des Stators 400 im Sperrmodus entlang der Schnittlinie 6A-6A in Fig. 6. Die folgende Beschreibung bezieht sich auf die Figuren 6, 6A und 6B. Der Stator 400 ist im Wesentlichen identisch mit dem Stator von Fig. 5 (Bezugsnummer 300), wobei lediglich noch Zungen 402 an den Nasen 404 der Sperrscheiben 406 und Kerben 408 in den Fenstern 410 der Rastscheibe 412 hinzukommen. Im Freilaufmodus (Fig. 6A) liegen die Zungen 402 an der Zwischenplatte 302 an und versetzen die Platte in Bewegung. Dann fungiert die Zwischenplatte 302 als hydrodynamisches Lager zwischen der Scheibe 406 und der Scheibe 412. Im Sperrmodus rasten die Zungen 402 in die Kerben 408 ein und lassen die Nasen 404 ebenso in die Fenster 410 der Sperrscheiben 406 und 412 gleiten, wie dies für die Scheiben 52 und 308 in Fig. 5B beschrieben wurde. Gemäß einigen (nicht gezeigten) Aspekten beinhaltet die Zwischenplatte 302 Anschläge, damit die Fenster 410 im Sperrmodus nicht durch die Platte 302 zugedeckt werden.

Die obigen Figuren und Beschreibungen betreffen eine Einwegekupplung gemäß der vorliegenden Erfindung in einem Stator für einen Drehmomentwandler. Es ist jedoch klar, dass eine Einwegekupplung gemäß der vorliegenden Erfindung in einer beliebigen Kraftfahrzeugbaugruppe verwendet werden kann, unter anderem, aber nicht ausschließlich, im Stator eines Drehmomentwandlers, in einem Drehmomentwandler, einem Betätigungsmechanismus, einem Hilfsantrieb oder einem Schaltgetriebe. In den oben angeführten Beispielen wird ferner eine Einwegekupplung gemäß der vorliegenden Erfindung mit einer in Drehrichtung fixierten Platte beschrieben. Es ist jedoch klar, dass eine vorliegende Erfindung auch ohne eine fixierte Platte verwendet werden kann. Zum Beispiel kann die Nabe, wie in den Figuren 1 und 1A, drehbar angebracht sein, sodass sich der Freilaufmodus und der Sperrmodus auf die relative Bewegung der Platten 14 und 24 zueinander bezieht. Zum Beispiel drehen sich die Platten bei Rotation in der Richtung 36 im Freilauf, wenn sich die Platte 14 schneller dreht als die Platte 24, das heißt, die Kanten 38 gleiten gemäß der obigen Beschreibung auf die Nasen. Die Platten rasten ein, wenn sich die Platte 14 langsamer dreht als die Platte 24, sodass die Kanten 38 gemäß der obigen Beschreibung an der Frontseite der Nasen einrasten. Das heißt, die Platte 14 dreht sich bezüglich der Platte 24 in der Richtung 42.

Es ist klar, dass eine Einwegekupplung gemäß der vorliegenden Erfindung nicht auf die in den Figuren darstellte Anordnung von Platten oder Scheiben und Öffnungen und Vorsprüngen oder Nasen beschränkt ist. Das heißt, die Stellen für die Öffnungen und Vorsprünge können vertauscht sein. Zum Beispiel können ausgehend von den Figuren 1 bis 1 B die Öffnungen 20 in der Platte 24 und die Nasen 26 in der Platte 14 gebildet sein. Das vorangehende Beispiel kann auf die anderen oben gezeigten Anordnungen, beispielsweise in Fig. 3, angewendet werden, in denen die Fenster 118 in der Scheibe 120 und die Nasen 122 in der Scheibe 114 gebildet sind. Das heißt, eine der Platten oder Scheiben ist mit Öffnungen oder Vorsprüngen und die andere Platte oder Scheibe mit dem Gegenstück zu den Öffnungen oder Vorsprüngen versehen.

Die Einwegekupplung gemäß der vorliegenden Erfindung kann sehr wirtschaftlich gefertigt und montiert werden. Es ist klar, dass viele Komponenten eines Stators gemäß der vorliegenden Erfindung aus gepressten Stanzteilen gefertigt werden und die bisher verwendeten massiven Druckguss- oder Spritzgussteile ersetzen können. Ferner entfallen einzelne (nicht gezeigte) Elemente, zum Beispiel Walzen, Sperrklinken, Federn usw. Aus diesem Grunde verbraucht ein Stator gemäß der vorliegenden Erfindung weniger Material und ist leichter als Statoren nach dem Stand der Technik mit einer Freilauffunktion.

Somit zeigt sich, dass die Aufgaben der Erfindung auf rationelle Weise gelöst werden, obwohl dem Fachmann klar ist, dass an der Erfindung Änderungen und Modifikationen angebracht werden können, ohne vom Geist oder Geltungsbereich der beanspruchten Erfindung abzuweichen. Obwohl die Erfindung unter Bezug auf eine bestimmte bevorzugte Ausführungsart beschrieben wurde, ist klar, dass daran Änderungen vorgenommen werden können, ohne vom Geist oder Geltungsbereich der beanspruchten Erfindung abzuweichen.

## Patentansprüche

1. Einwegekupplung für eine Kraftfahrzeugbaugruppe, wobei die Einwegekupplung Folgendes umfasst:
eine erste Platte, die im Wesentlichen rechtwinklig zu einer Achse der ersten Baugruppe steht und in Drehrichtung mit einem sich drehenden Element der Baugruppe verbunden ist, wobei die erste Platte erste Öffnungen oder erste Vorsprünge beinhaltet; und
eine zweite Platte, die im Wesentlichen rechtwinklig zur ersten Achse steht, wobei die zweite Platte das Gegenstück zu den ersten Öffnungen und den ersten Vorsprüngen beinhaltet und die ersten Öffnungen und die ersten Vorsprünge ineinander einrasten können.

2. Kupplung nach Anspruch 1, bei welcher sich die erste Platte in einer ersten Richtung um die Achse drehen kann und die ersten Vorsprünge in die ersten Öffnungen einrasten können, wenn sich die erste Platte in der ersten Richtung schneller dreht als die zweite Platte.

3. Kupplung nach Anspruch 2, bei welcher sich die zweite Platte in der ersten Richtung um die Achse drehen kann.

4. Kupplung nach Anspruch 2, bei welcher sich die zweite Platte nicht um die Achse drehen kann.

5. Kupplung nach Anspruch 2, bei welcher die ersten Vorsprünge und die ersten Öffnungen gleitend ineinander eingreifen können, wenn sich die erste Platte bezüglich der zweiten Platte in einer der ersten Richtung entgegengesetzten zweiten Richtung dreht.

6. Kupplung nach Anspruch 5, bei welcher sich die zweite Platte nicht um die Achse drehen kann.

7. Kupplung nach Anspruch 5, welche ferner Folgendes umfasst:
eine in axialer Richtung zwischen der ersten und der zweiten Platte angeordnete Zwischenplatte, wobei die Zwischenplatte und die ersten Vorsprünge ineinander einrasten können und die Zwischenplatte das Einrasten der ersten Vorsprünge in die ersten Öffnungen verhindert, wenn sich die erste Platte bezüglich der zweiten Platte in der zweiten Richtung dreht.

8. Kupplung nach Anspruch 7, bei welcher die Zwischenplatte ferner eine zweite Öffnung umfasst und die erste Öffnung und die zweite Öffnung aufeinander ausgerichtet werden können.

9. Kupplung nach Anspruch 7, bei welcher der mindestens erste Vorsprung eine Zunge umfasst, die in die erste oder die zweite Platte einrasten kann, wenn sich die Zwischenplatte in der zweiten Richtung dreht.

10. Kupplung nach Anspruch 7, bei welcher von der ersten Platte, der zweiten Platte und der Zwischenplatte mindestens ein Teil ein Stanzteil ist.

11. Kupplung nach Anspruch 1, die ferner Folgendes umfasst:
ein an der zweiten Platte anliegendes Andruckelement; und
bei welcher die zweite Platte in axialer Richtung verschoben werden kann und das Andruckelement die zweite Platte entlang der Achse gegen die erste Platte drückt.

12. Kupplung nach Anspruch 11, bei welcher das Andruckelement eine Feder ist.

13. Kupplung nach Anspruch 1, bei welcher die zweite Platte von Natur aus elastisch ist und an der ersten Platte anliegt.

14. Kupplung nach Anspruch 1, der ferner Folgendes umfasst:
eine dritte Platte, die im Wesentlichen rechtwinklig zur Achse angeordnet und in Drehrichtung mit dem sich drehenden Element verbunden ist, wobei die dritte Platte eine zweite Öffnung oder einen zweiten Vorsprung beinhaltet; und,
eine vierte Platte, die im Wesentlichen rechtwinklig zur Achse angeordnet ist, wobei die vierte Platte das Gegenstück zu der zweiten Öffnung oder dem zweiten Vorsprung beinhaltet und die zweite Öffnung und der zweite Vorsprung ineinander einrasten können.

15. Kupplung nach Anspruch 1, die ferner Folgendes umfasst:
Mindestens eine zwischen der ersten und der zweiten Platte angeordnete Bahn; und,
mindestens ein in der mindestens einen Bahn angeordnetes Element, das an der ersten und an der zweiten Platte anliegt, wobei die zweite Platte in axialer Richtung gegenüber der ersten Platte verschoben werden kann, wenn sich das Element in der Bahn bewegt.

16. Kupplung nach Anspruch 15, bei der die erste Öffnung und der erste Vorsprung als Reaktion auf die Bewegung ineinander einrasten können.

17. Kupplung nach Anspruch 15, bei der das Element als Reaktion auf die Drehung der ersten Platte gegenüber der zweiten Platte bewegt werden kann.

18. Kupplung nach Anspruch 15, bei der das Element eine Kugel ist.

19. Kupplung nach Anspruch 15, bei der die Kraftfahrzeugbaugruppe ein Drehmomentwandler, ein Betätigungsmechanismus, ein Hilfsantrieb oder ein Schaltgetriebe sein kann.

20. Einwegekupplung für einen Stator für einen Drehmomentwandler, wobei die Einwegekupplung Folgendes umfasst:
eine erste Platte, die in radialer Richtung um eine Achse des Stators herum angeordnet und in Drehrichtung mit einem Rahmen des Stators verbunden ist, wobei die erste Platte eine erste Öffnung oder einen ersten Vorsprung beinhaltet; und
eine zweite Platte, die in radialer Richtung um die Achse herum angeordnet und in Drehrichtung mit einer Nabe des Stators verbunden ist, wobei die zweite Platte das Gegenstück zu der ersten Öffnung bzw. des ersten Vorsprungs beinhaltet und der erste Vorsprung und die erste Öffnung ineinander einrasten können, wenn sich die erste Platte in einer ersten Richtung dreht, und der erste Vorsprung und die erste Öffnung gleitend ineinander einrasten können, wenn sich die erste Platte in einer der ersten Richtung entgegengesetzten zweiten Richtung dreht.

21. Kupplung nach Anspruch 20, die ferner Folgendes umfasst:
eine Zwischenplatte, die in axialer Richtung zwischen der ersten und der zweiten Platte angeordnet ist, wobei die Zwischenplatte und der erste Vorsprung ineinander einrasten können und die Zwischenplatte das Einrasten des ersten Vorsprungs in die erste Öffnung verhindert, wenn sich die erste Platte in der zweiten Richtung dreht.

22. Kupplung nach Anspruch 21, bei der von der ersten Platte, der zweiten Platte und der Zwischenplatte mindestens ein Teil ein Stanzteil ist.

23. Kupplung nach Anspruch 20, die ferner Folgendes umfasst:
ein an der zweiten Platte anliegendes Andruckelement; und
bei welcher die zweite Platte in axialer Richtung verschoben werden kann und das Andruckelement die zweite Platte entlang der Achse gegen die erste Platte drückt.

24. Kupplung nach Anspruch 20, die ferner Folgendes umfasst:
mindestens eine zwischen der ersten und der zweiten Platte angeordnete Bahn; und
mindestens ein in der mindestens einen Bahn angeordnetes Element, das an der ersten und an der zweiten Platte anliegt, wobei das Element bewegt werden kann, wenn sich die erste Platte gegenüber der zweiten Platte dreht, und wobei als Reaktion auf die Bewegung die zweite Platte in axialer Richtung gegenüber der ersten Platte verschoben werden kann und die erste Öffnung und der erste Vorsprung ineinander einrasten können.

25. Einwegekupplung für einen Stator für einen Drehmomentwandler, wobei die Einwegekupplung Folgendes umfasst:
eine erste gestanzte Platte, die im Wesentlichen rechtwinklig zu einer Achse des Stators steht und in Drehrichtung mit einem Rahmen des Stators verbunden ist, wobei die erste Platte eine erste Öffnung beinhaltet;
eine zweite gestanzte Platte, die im Wesentlichen rechtwinklig zu der Achse steht und in Drehrichtung mit einer Nabe des Stators verbunden ist, wobei die zweite Platte erste Vorsprünge beinhaltet;
ein an der zweiten Platte anliegendes Andruckelement; und
eine in axialer Richtung zwischen der ersten und der zweiten Platte angeordnete Zwischenplatte, wobei der erste Vorsprung und die erste Öffnung ineinander einrasten können, wenn sich die erste Platte in einer ersten Richtung dreht, und der erste Vorsprung und die erste Öffnung gleitend ineinander einrasten können, wenn sich die erste Platte in einer der ersten Richtung entgegengesetzten zweiten Richtung dreht, wobei als Reaktion auf die Drehung der ersten Platte in der ersten Richtung die Zwischenplatte und der erste Vorsprung ineinander einrasten können und die Zwischenplatte das Einrasten des ersten Vorsprungs in die erste Öffnung verhindert und wobei die zweite Platte in axialer Richtung verschoben werden kann und das Andruckelement die zweite Platte entlang der Achse gegen die erste Platte drückt.

26. Verfahren für den Freilauf in einem Stator für einen Drehmomentwandler, wobei das Verfahren die folgenden Schritte umfasst:
Anordnen einer ersten Platte im Wesentlichen rechtwinklig zu einer Achse des Stator, wobei die erste Platte mindestens eine erste Öffnung beinhaltet;
Verbinden der ersten Platte mit einem Rahmen des Stators;
Anordnen einer zweiten Platte im Wesentlichen rechtwinklig zu der Achse, wobei die zweite Platte mindestens einen ersten Vorsprung beinhaltet;
Verbinden der zweiten Platte mit einer Nabe des Stators;
Drehen der ersten Platte in einer ersten Richtung; und
Einrasten des mindestens einen Vorsprungs in die mindestens eine Öffnung.

27. Verfahren nach Anspruch 26, das ferner Folgendes umfasst:
Drehen der ersten Platte in einer der ersten Richtung entgegengesetzten zweiten Richtung; und
Gleitendes Einrasten des mindestens einen ersten Vorsprungs in die mindestens eine erste Öffnung.
